# FASCICULE DE BREVET EUROPEEN

(11) **EP 0 937 358 B1**
(45) Date de publication et mention de la délivrance du brevet: **02.05.2002**
(21) Numéro de dépôt: 97912286.8
(22) Date de dépôt: 30.10.1997
(51) Int. Cl.: H04N 1/333

(54) **TELECOPIEUR A ADAPTATION AUTOMATIQUE DE PARAMETRES DE TRANSMISSION**
FAKSIMILEGERÄT MIT AUTOMATISCHER ANPASSUNG VON ÜBERTRAGUNGSPARAMETERN
FAX MACHINE WITH AUTOMATIC ADJUSTMENT OF TRANSMISSION PARAMETERS

(30) Priorité: 06.11.1996 FR 9613524
(43) Date de publication de la demande: 25.08.1999
(73) Titulaire: SAGEM S.A., 75116 Paris (FR)
(72) Inventeur: CASTET, Philippe, F-75018 Paris (FR)
(74) Mandataire: Bloch, Gérard
(86) Numéro de dépôt international: FR9701946
(87) Numéro de publication internationale: WO9820673

(56) Documents cités:
- US-A- 4 733 303
- US-A- 5 303 066
- US-A- 5 381 240
- PATENT ABSTRACTS OF JAPAN vol. 018, no. 549 (E-1618), 19 octobre 1994 & JP 06 197207 A (RICOH CO LTD), 15 juillet 1994,

## Description

La transmission d'une télécopie entre deux télécopieurs nécessite un dialogue préalable entre eux, pour établir une liaison de données servant à la transmission de la télécopie proprement dite. En effet, les télécopieurs peuvent présenter des paramètres de transmission différents et, par exemple, avoir des plages de vitesses ne se recouvrant pas totalement. De ce fait, le télécopieur appelé indique en retour ses paramètres de transmission, en particulier sa vitesse maximale possible, et le télécopieur appelant choisit alors la plus faible entre les vitesses maximales des deux télécopieurs.

Il faut ensuite vérifier que la liaison téléphonique les reliant est capable de transmettre une modulation à une telle vitesse. Il est donc procédé à un court essai de transmission de données prédéterminées et le télécopieur appelé indique en retour le taux d'erreur. S'il dépasse un seuil, le télécopieur appelant réduit alors la vitesse pour un nouvel essai.

Une telle façon de procéder entraîne une perte de temps. En outre, il existe d'autres paramètres de transmission, tels en particulier le mode de codage, la correction d'erreurs, qui sont sensibles à la qualité de la liaison téléphonique et ne sont pas toujours choisis de façon optimale, si bien que cette incertitude de choix entraîne des erreurs de transmission, mécontenant les utilisateurs.

L'invention vise à réduire l'incertitude sur au moins l'un des paramètres relatifs à la transmission afin de gagner en temps et/ou en qualité de transmission.

Un appareil de télécopie, visant à raccoucir la période préalable à l'établissement de la liaison de données, est décrit dans le document US-A-4 733 303.

A cet effet, l'invention concerne un télécopieur destiné à être relié à un réseau téléphonique, comprenant des moyens d'émission et de réception de télécopies, des moyens de réglage de la valeur d'au moins un paramètre des moyens d'émission et de réception pour l'adapter au réseau et à des télécopieurs correspondants, des moyens de surveillance de la liaison téléphonique pour commander

les moyens de réglage, les moyens de réglage comprenant une mémoire de stockage d'au moins une suite de valeurs passées et adaptées dudit paramètre, constituant une plage de valeurs, caractérisé par le fait que les moyens de réglage comprennent des moyens de lecture de la mémoire et d'extraction de celle-ci d'une valeur choisie dans la plage à appliquer en sortie des moyens de réglage et offrant les meilleures performances de transmission.

Ainsi, les moyens de réglage sont commandés pour configurer les moyens d'émission et de réception selon au moins une valeur de paramètre tirée d'un historique de ces valeurs assurant d'emblée, statistiquement, une transmission correcte. Il s'agit donc d'une adaptation automatique. On peut ainsi, en particulier, régler au mieux des paramètres dont l'influence sur la qualité de la liaison n'est pas décelable avec précision- lors du court essai préalable à la transmission d'une télécopie, par exemple la résistance au bruit sporadique.

L'invention sera mieux comprise à l'aide de la description suivante d'une forme de réalisation préférée du télécopieur de l'invention, en référence au dessin annexé, sur lequel :
- la figure 1 est un schéma par blocs fonctionnels du télécopieur;
- la figure 2 est un organigramme illustrant le fonctionnement du télécopieur, et;
- la figure 3 représente un historique, et la plage de valeurs correspondante, d'un paramètre de transmission.

Le télécopieur représenté comporte un ensemble 1 d'émission-réception de télécopies, comprenant un modem, relié à une ligne 10 du réseau téléphonique commuté RTC et dont une pluralité de paramètres de transmission sont fixés par un circuit de réglage 2. Un circuit 3 de surveillance de liaison téléphonique commande le circuit de réglage 2 afin d'adapter les valeurs de paramètres de transmission en vue d'obtenir une qualité de transmission satisfaisante avec un télécopieur correspondant.

Le circuit de réglage 2 comporte une mémoire vive 25 contenant une pluralité de suites ou plages de valeurs P (fig. 3) correspondant chacune à un paramètre de transmission particulier. Ces plages de valeurs constituent chacune un historique des valeurs du paramètre concerné qui ont été retenues, lors de transmissions passées de télécopies, comme étant adaptées pour assurer un niveau de qualité de transmission satisfaisant, c'est-à-dire pour que le taux de bits défectueux reste inférieur à un seuil prédéterminé, tout en ayant les meilleures performances possibles pour la communication passée concernée, par exemple un débit maximal.

La mémoire 25 est exploitée par un circuit 26, un microprocesseur, qui en assure l'écriture et la lecture pour en extraire, pour chaque paramètre, une valeur de la plage, à appliquer en sortie du circuit de réglage 2 afin de régler l'ensemble d'émission-réception 1. Le microprocesseur 26 est commandé par le circuit de surveillance 3, c'est-à-dire qu'il en reçoit les informations ou ordres pertinents, qu'il gère selon des critères d'optimisation des communications, comme le compromis vitesse/qualité (taux d'erreurs), définis localement par programme.

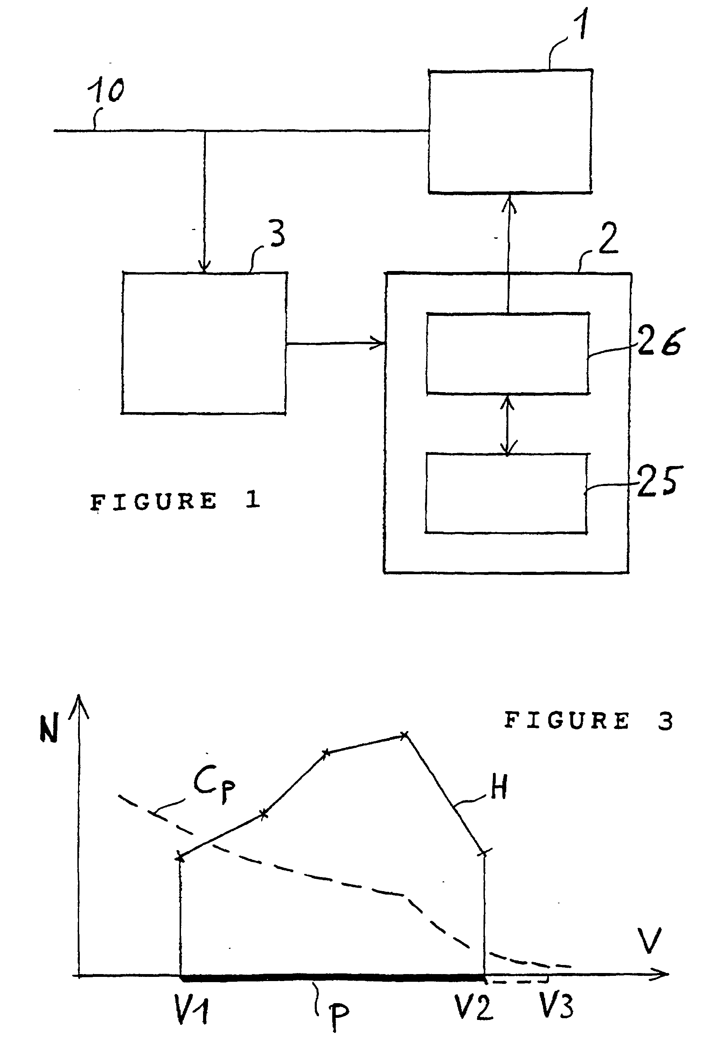

Le circuit de surveillance 3 comporte un microprocesseur fonctionnellement relié à la ligne 10, comme représenté sur la figure 1. En pratique, le circuit 3 est relié à la ligne 10 à travers l'ensemble 1 et assure la gestion d'un protocole d'échange de télécopies. A ce titre, le circuit 3 est en mesure de détecter le taux de bits erronés dans les messages reçus, en utilisant les codes de redondance ou CRC transmis en plus des bits utiles. En émission, le circuit 3 peut recevoir du télécopieur appelé des indications du taux d'erreur bit ou trame.

Le fonctionnement du télécopieur va maintenant être expliqué plus en détails.

De façon classique, lors de l'établissement d'une liaison téléphonique pour la transmission d'une télécopie, le télécopieur appelé indique à l'appelant, par l'émission en retour de signaux d'identification numérique DIS, ses paramètres de transmission. Ce sont par exemple sa vitesse maximale, en bits/s, le type de modulation en ligne, le Mode de Correction des Erreurs, par exemple contrôle par trames (ECM) avec demande de répétition éventuelle, et le codage, par exemple MH (modifié Huffmann), Mr (Modified Reed) ou Reed Modifié, ou encore MMR (Modified Modified Reed) ou Reed Modifié Modifié en cas de mode ECM.

Le télécopieur émetteur compare alors les paramètres ci-dessus à ses paramètres intrinsèques et choisit, pour chaque paramètre utilisé pour l'émission de la télécopie, la valeur, compatible avec les deux télécopieurs, qui offre les meilleures performances de transmission. Par performances, on entend la rapidité la plus élevée de transmission, fonction de la vitesse de transmission bit et du codage, mais aussi entre autres la qualité de transmission, c'est-à-dire l'absence de bits erronés, dont un excès nécessiterait une retransmission. Il s'agit donc d'une pondération de diverses exigences, définie par le programme du microprocesseur 26.

Le télécopieur émetteur procède ensuite à un essai de transmission d'une séquence prédéterminée de bits et le télécopieur récepteur indique un éventuel taux d'erreur inacceptable. En pareil cas, le télécopieur émetteur choisit une vitesse plus faible et recommence l'essai, jusqu'à obtenir une transmission satisfaisante. Les valeurs de paramètres alors retenues tiennent compte des caratéristiques intrinsèques des télécopieurs avec leur ligne de rattachement à un central téléphonique du RTC, a priori figées, et des caractéristiques de la liaison à travers le RTC, variables d'une communication à l'autre.

Le concept de l'invention est d'établir un historique ou plage de variation d'au moins un des paramètres ci-dessus et ceci pour chaque télécopieur correspondant, si on peut l'identifier, ou pour des groupes de télécopieurs, ayant par exemple un identifiant partiel commun (préfixe du numéro de téléphone ou encore type de télécopieur comme par exemple le Groupe III ou IV de transmission).

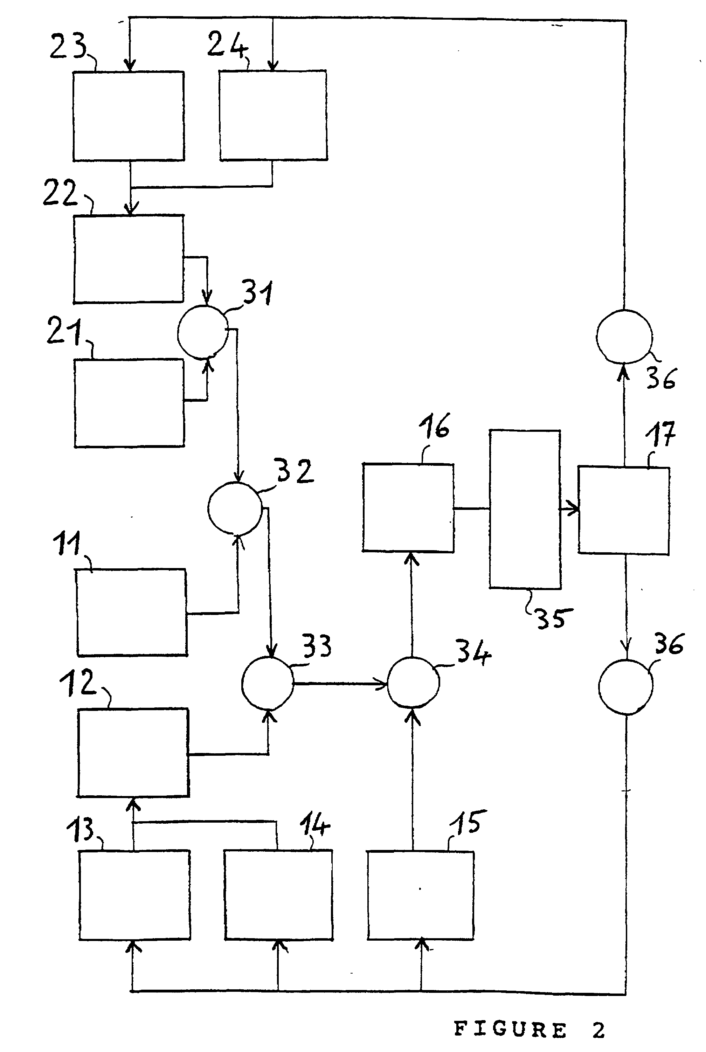

L'organigramme de la figure 2 illustre le concept ci-dessus.

En réception, le télécopieur de l'invention fournit (31) à l'appelant, dans les signaux DIS, ses paramètres intrinsèques 21 en tenant compte des derniers paramètres retenus pour les toutes dernières communications passées en réception (22). L'historique 23 des paramètres de toutes les communications passées en réception est établi tous numéros de téléphone confondus pour les télécopieurs ayant appelé. Il spécifie en fait le télécopieur avec sa ligne de rattachement à un central téléphonique du RTC. Dans le cas où le RTC assure le service de fourniture de l'identité d'un appelant, l'historique statistique des paramètres 23 est alors constitué d'une table divisée en une pluralité d'historiques 24 de valeurs de paramètres pour une pluralité d'appelants. L'identité du télécopieur appelant peut aussi être déterminée, une fois la communication établie, d'après des signaux d'identification contenus dans le message de télécopie, ce qui permet de compléter les historiques 24.

Les valeurs de paramètres émises en retour à l'étape 31 tiennent alors compte des historiques les plus adaptés au télécopieur appelant, c'est-à-dire, dans l'ordre décroissant, 24, 23, 22.

Dans le cas d'un appel à partir du télécopieur de l'invention, le télécopieur appelé ayant fourni ses paramètres intrinsèques, ou même des paramètres modifiés s'il s'agit d'un télécopieur semblable à celui de l'invention, ces paramètres sont comparés, par le microprocesseur 26, à ceux (11) du télécopieur appelant, à l'étape 32. Le télécopieur appelant comporte des tables d'historiques en émission 12-14 homologues des historiques 22-24, qui ne seront donc pas décrits plus en détail. Comme il s'agit d'émission, le télécopieur appelant connaît donc l'identité du correspondant et peut donc utiliser et mettre à jour l'historique 14 et les autres. Les historiques 12-14 sont pris en compte à l'étape 33 par le microprocesseur 26 pour modifier; et affiner, les valeurs de paramètre fournies à l'étape 32.

Il est aussi prévu une table d'historiques 15 des paramètres en fonction des préfixes téléphoniques, afin de tenir compte du réseau téléphonique du pays dans lequel se trouve un télécopieur appelé. L'historique 15 est pris en compte à l'étape 34 pour modifier les valeurs de l'étape 33 et fournir un jeu 16 de paramètres retenus pour le début de la communication. A l'étape suivante 35, le circuit de surveillance 3 effectue en permanence un contrôle de la qualité de la communication et commande éventuellement, par le circuit 2, une ou plusieurs modifications successives de la valeur d'au moins un paramètre, comme expliqué plus loin, pour aboutir à un jeu 17 des valeurs de paramètres en fin de communication. Le jeu 17 sert à alimenter (36) les historiques 12-15. Les historiques 22-24 de réception sont alimentés de cette façon. Ainsi, lors de l'établissement d'une communication, la plage de valeurs adaptées d'au moins un paramètre, ici plusieurs, du télécopieur correspondant est sélectionnée dans la mémoire 25, contenant les plages ou historiques 12-15 et 22-24 et les valeurs intrinsèques 11, 21, par le microprocesseur 26 recevant, du circuit de surveillance 3, les informations d'identité du correspondant, comme son numéro de téléphone ou le préfixe de celui-ci. Le microprocesseur 26 choisit alors une valeur de chaque plage 22-24 ou 12-15, compatible (32) avec celle du télécopieur correspondant si c'est ce dernier qui est appelé, et applique le jeu de valeurs ainsi sélectionnées au circuit de réglage 2.

A l'étape 35, le circuit de surveillance 3 commande une adaptation automatique des valeurs de paramètres sélectionnées. Pour cela, à chaque communication, il commande au microprocesseur 26 d'effectuer la mémorisation, dans les historiques, d'une note de qualité de transmission pour chaque correspondant ou groupe de correspondants, par exemple le pourcentage de trames défectueuses. Lorsque ces notes indiquent que le taux d'erreur, sur l'historique, est inférieur à un seuil déterminé, la valeur des paramètres sélectionnés pour une nouvelle communication est choisie en dehors de la plage correspondante, du côté améliorant les performances de la transmission, par exemple une vitesse accrue. En d'autres termes, on élargit la plage de valeurs utilisées antérieurement en y ajoutant une valeur ayant une bonne probabilité de convenir.

Comme le montre la figure 3, qui représente l'historique H des vitesses V retenues sous forme d'histogramme du nombre N de fois qu'elles ont été retenues, la plage P de vitesses s'étend d'une vitesse minimale V1 à une vitesse maximale V2 et le microprocesseur 26 peut choisir d'élargir la plage jusqu'à la vitesse V3 supérieure à V2. On comprendra que cet histogramme sous forme de courbe continue représente en fait une suite de points discrets relatifs aux vitesses discrètes normalisées possibles. Au niveau du concept de choix de valeur de paramètre, comme l'historique est de taille finie et est susceptible d'évoluer par élargissement aussi vers les valeurs de vitesse inférieures, on peut considérer que la plage P s'étend en-dessous de la valeur minimale V1 si l'on veut une probabilité très élevée de bonne transmission dès le début de la communication.

Inversement, le souhait de performances accrues amènerait à choisir la valeur V3, avec le risque de devoir la diminuer, en y affectant une mauvaise note, si la qualité de transmission se révélait être insuffisante. La courbe Cp en pointillés représente schématiquement la probabilité de transmission satisfaisante dès le début d'une communication, et varie comme la note de qualité.

## Revendications

1. Télécopieur destiné à être relié à un réseau téléphonique (10), comprenant des moyens (1) d'émission et de réception de télécopies, des moyens de réglage (2) de la valeur d'au moins un paramètre des moyens d'émission et de réception pour l'adapter au réseau et à des télécopieurs correspondants, des moyens (3) de surveillance de la liaison téléphonique pour commander les moyens de réglage (2), les moyens de réglage (2) comprenant une mémoire de stockage (25) d'au moins une suite de valeurs passées et adaptées dudit paramètre, constituant une plage de valeurs, **caractérisé par le fait que** les moyens de réglage (2) comprennent des moyens (26) de lecture de la mémoire (25) et d'extraction de celle-ci d'une valeur choisie dans la plage, à appliquer en sortie des moyens de réglage (2) et offrant les meilleures performances de transmission.

2. Télécopieur selon la revendication 1, dans lequel la mémoire de stockage (25) comporte une table (21) contenant une pluralité de plages correspondant respectivement à une pluralité de numéros de téléphone et des moyens (26) de sélection d'une des plages en fonction du numéro de téléphone d'un télécopieur correspondant.

3. Télécopieur selon l'une des revendications 1 et 2, dans lequel les moyens de réglage (2) comprennent des moyens (26) pour élargir les plages.

4. Télécopieur selon l'une des revendications 1 à 3, dans lequel les moyens PP (26) de lecture et d'extraction, des moyens de réglage (2), sont commandés pour les moyens de surveillance (3).

5. Télécopieur selon la revendication 4, dans lequel les moyens de surveillance (3) sont agencés pour recevoir du réseau téléphonique des informations d'identification de télécopieurs appelants fournies par celui-ci.

## Patentansprüche

1. Fernkopierer, der dazu bestimmt ist, an ein Telefonnetz (10) angeschlossen zu werden, mit einer Einrichtung (1) zum Senden und zum Empfangen von Fernkopien, einer Einrichtung zum Einstellen (2) des Wertes von zumindest einem Parameter der Einrichtung zum Senden und Empfangen, um diese an das Netz und an korrespondierende Fernkopierer anzupassen, einer Einrichtung (3) zum Überwachen der Telefonverbindung, um die Einstelleinrichtung (2) anzusteuern, wobei die Einstelleinrichtung (2) einen Speicher (25) zur Speicherung von zumindest einer Folge von früheren und angepaßten Werten des genannten Parameters aufweist, die einen Wertebereich bildet, **dadurch gekennzeichnet, daß** die Einstelleinrichtung (2) eine Einrichtung (26) zum Auslesen des Speichers (25) und zum Auffinden eines innerhalb des Bereichs gewählten Werts aus diesem aufweist, der am Ausgang der Einstelleinrichtung (2) anzulegen ist und besseres Übertragungsverhalten bietet.

2. Fernkopierer nach Anspruch 1, **dadurch gekennzeichnet, daß** der Speicher zur Speicherung (25) eine Tabelle (21) aufweist, die eine Anzahl von Bereichen enthält, die jeweils einer Anzahl von Telefonnummern entsprechen, sowie eine Einrichtung (26) zur Auswahl eines der Bereiche in Abhängigkeit der Telefonnummer eines korrespondierenden Fernkopierers.

3. Fernkopierer nach einem der Ansprüche 1 oder 2, **dadurch gekennzeichnet, daß** die Einstelleinrichtung (2) Mittel (26) zum Erweitern der Bereiche aufweist.

4. Fernkopierer nach einem der Ansprüche 1 bis 3, **dadurch gekennzeichnet, daß** die Mittel PP (26) zum Auslesen und zum Auffinden der Einstelleinrichtung (2) durch die Überwachungseinrichtung (3) gesteuert sind.

5. Fernkopierer nach Anspruch 4, **dadurch gekennzeichnet, daß** die Überwachungseinrichtung (3) so eingerichtet ist, daß sie über das Telefonnetz Informationen zur Identifikation von anrufenden Fernkopierern, die von diesem geliefert werden, empfangen kann.

## Claims

1. Fax machine intended to be connected to a telephone network (10), comprising means (1) for sending and receiving facsimiles, means for adjusting (2) the value of at least one parameter of the sending and receiving means in order to adapt it to the network and to associated fax machines, means (3) for monitoring the telephone link in order to control the adjusting means (2), said adjusting means (2) comprising a memory (25) for storing at least one series of past and adapted values of said parameter, constituting a range of values, **characterised in that** the adjusting means (2) comprise means (26) for reading the memory (25) and extracting there from a value chosen within the range, to be applied at the output of the adjusting means (2) and offering the best transmission performances.

2. Fax machine according to claim 1, wherein the storage memory (25) comprises a table (21) containing a plurality of ranges corresponding respectively to a plurality of telephone numbers and means (26) for selecting one of the ranges as a function of the telephone number of an associated fax machine.

3. Fax machine according to one of claims 1 and 2, wherein the adjusting means (2) comprise means (26) for widening the ranges.

4. Fax machine according to one of claims 1 to 3, wherein the reading and extracting means PP (26) of the adjusting means (2) are controlled by the monitoring means (3).

5. Fax machine according to claim 4, wherein the monitoring means (3) are arranged to receive from the telephone network information identifying calling fax machines which is provided by the latter.
